(19) Europäisches Patentamt / European Patent Office / Office européen des brevets

(11) **EP 2 625 507 B1**

(12) **EUROPÄISCHE PATENTSCHRIFT**

(45) Veröffentlichungstag und Bekanntmachung des Hinweises auf die Patenterteilung:
**22.01.2020 Patentblatt 2020/04**

(21) Anmeldenummer: **11757903.7**

(22) Anmeldetag: **21.09.2011**

(51) Int Cl.:
*G01N 21/85* (2006.01)  *G01N 21/64* (2006.01)
*G01N 21/27* (2006.01)  *G01N 21/77* (2006.01)

(86) Internationale Anmeldenummer:
**PCT/EP2011/066437**

(87) Internationale Veröffentlichungsnummer:
**WO 2012/045580 (12.04.2012 Gazette 2012/15)**

(54) **VERFAHREN ZUM BETREIBEN EINES OPTOCHEMISCHEN SENSORS**

METHOD FOR OPERATING AN OPTOCHEMICAL SENSOR

PROCÉDÉ POUR FAIRE FONCTIONNER UN CAPTEUR OPTOCHIMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.10.2010 EP 10186924**

(43) Veröffentlichungstag der Anmeldung:
**14.08.2013 Patentblatt 2013/33**

(73) Patentinhaber: **Mettler-Toledo GmbH**
**8606 Greifensee (CH)**

(72) Erfinder:
• **VANONI, Claudio**
  **CH-6677 Aurigeno (CH)**
• **VENTURINI, Francesca**
  **CH-8600 Dübendorf (CH)**
• **KLEINLOGEL, Christoph**
  **CH-8049 Zürich (CH)**

(74) Vertreter: **Mettler-Toledo**
**IP Department**
**Im Langacher 44**
**8606 Greifensee (CH)**

(56) Entgegenhaltungen:
WO-A1-02/090951    WO-A1-2005/106435
WO-A2-2009/074867    US-A1- 2010 032 583

EP 2 625 507 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung bezieht sich auf ein Verfahren zum Betreiben eines optochemischen Sensors sowie einen entsprechenden Sensor zur Durchführung des Verfahrens.

Optochemische Sensoren werden sowohl im Labor als auch im Prozess zur Bestimmung von unterschiedlichsten Analyten eingesetzt. Im Prozess können beispielsweise optochemische Sensoren, welche auf dem Prinzip der Fluoreszenzlöschung beruhen, zur Bestimmung von in einem Fluid gelösten Gasen, wie zum Beispiel Sauerstoff oder Kohlendioxid eingesetzt werden. Hierzu weist der Sensor ein sensitives Element mit einem Signalstoff auf, welcher mit dem Analyten wechselwirken kann. Bei der Fluoreszenzlöschung werden die Moleküle des Signalstoffs durch Bestrahlung mit Licht einer geeigneten Wellenlänge angeregt. Die angeregten Moleküle geben dann bei der Rückkehr in den Grundzustand die aufgenommene Energie in Form von Fluoreszenz wieder ab, welche durch Wechselwirkung mit dem Analyten gelöscht wird. Für die Detektion der Fluoreszenzlöschung ist es wichtig, dass diese eine ausreichende Intensität oder Energie aufweist, welche im Zusammenhang mit der eingestrahlten Strahlungsintensität steht.

Prinzipiell können mit dem Prinzip der Fluoreszenzlöschung auch eine Vielzahl anderer Analyte in einem fluiden Messmedium bestimmt werden, solange der Signalstoff, beispielsweise ein Fluorophor, sensitiv in Bezug auf den gewünschten Analyten ist. Der Begriff "Fluid" umfasst hier sowohl Flüssigkeiten, Gase sowie Mischungen daraus.

Nachteilig an diesen, einen Signalstoff umfassenden Sensoren ist, dass abhängig vom Einsatzbereich, und insbesondere vom Messmedium, die Fluoreszenz des Signalstoffs im Laufe der Zeit nachlässt, sich also die Intensität der Fluoreszenzlöschung verringert. Das Nachlassen der Fluoreszenz kann beispielsweise auf die zur Messung eingesetzte Strahlung sowie die eingesetzten Reinigungsmethoden, wie z.B. Autoklavieren oder die bekannten CIP und/oder SIP-Prozesse (Clean in Place; Sterilize in Place) zurückgeführt werden. Um das Nachlassen der Fluoreszenz und die damit verbundene Verschlechterung der Messergebnisse zu kompensieren, weisen nach dieser Methode arbeitende optochemische Sensoren häufig austauschbare sensitive Elemente auf. Ein Austausch des sensitiven Elements stellt zwar die Funktionsfähigkeit des Sensors wieder her, allerdings kann damit auch der Produktionsablauf gestört werden, insbesondere durch den verursachten Aufwand und mögliche Reaktions- oder Prozessunterbrechungen. Unterbrechungen zum Austausch des Sensors oder des sensitiven Elements können unter Umständen erhebliche Kosten verursachen und sich zudem aufwendig gestalten, vor allem, wenn der Sensor an einer weniger gut zugänglichen Stelle in der Prozessanlage angebracht ist.

Die Alterung des sensitiven Elements beeinflusst jedoch nicht nur den Zeitpunkt des Austauschs, zudem verschlechtert sich mit fortschreitender Einsatzdauer des sensitiven Elements auch die Messgenauigkeit, was zu einer Verfälschung des Messwerts führen kann. Zudem muss der Anwender insbesondere Sensoren mit älteren sensitiven Elementen häufig kalibrieren, um die Qualität und Reproduzierbarkeit der Messergebnisse gewährleisten zu können.

Es sind verschiedene Methoden bekannt, um die Alterung des sensitiven Elements zu verzögern. Beispielsweise kann die Intensität der eingestrahlten Strahlung reduziert werden, allerdings führt diese Massnahme zu einer Erhöhung des Rauschens des Rohsignals, da dadurch auch die Intensität der Fluoreszenzlöschung reduziert wird. Ein verstärktes oder erhöhtes Rauschen führt dazu, dass insbesondere geringere Analytgehalte oder Konzentrationen nicht mehr mit einer ausreichenden Genauigkeit oder gar nicht mehr bestimmt werden können. Das Rauschen könnte durch eine einfache Mittelung über mehrere Rohsignale oder verarbeitete Signal reduziert werden, allerdings beeinflusst, genauer verlangsamt, dieses Verfahren die Ansprechzeit des Sensors, also die Zeit in welcher der Sensor auf eine Änderung des Messmediums reagiert.

Mit "Rohsignal" wird das unbearbeitete Signal bezeichnet, welches vom Detektor ausgegeben wird und eine Funktion des Analytgehalts ist. Dieses Rohsignal kann anschliessend in ein verarbeitetes Signal überführt werden, welches entweder direkt als Messwert ausgegeben oder weiter in einen Messwert überführt werden kann. Eine weitere Möglichkeit besteht darin, die Abtastrate der Messung zu verlängern, so dass die einzelnen Rohsignale mit einem grösseren zeitlichen Abstand voneinander aufgenommen werden. Auch diese Massnahme verlangsamt die Ansprechzeit des Sensors, insbesondere da schnelle Änderungen oder Veränderungen des Analytgehalts im Messmedium kaum noch detektiert werden können, vor allem wenn eine Veränderung des Messmediums zwischen zwei Messzeitpunkten stattfindet. Zudem kann die Abtastrate nur in einem begrenzten Bereich geändert werden, welcher etwa 1 bis 30 s umfasst, da sonst die Ansprechzeit des Sensors zu stark beeinflusst wird.

Eine weitere Möglichkeit zur Kompensation des Alterungsprozesses stellt eine rechnerische Kompensation bei der Verarbeitung der ermittelten Rohsignale dar. Die Alterung, genauer der Grad der Alterung, ist jedoch spezifisch für jede Applikation in der der Sensor eingesetzt wird, da abhängig von der Applikation der Sensor unterschiedlichen Bedingungen ausgesetzt ist, wie beispielsweise Messmedium, Analytgehalt, Temperatur, Druck, Reinigungsmethoden und/oder Reinigungshäufigkeit. Aus diesem Grund müsste für jede Applikation eine individuelle Korrektur- oder Kompensationsfunktion ermittelt, in der Software implementiert und durchgeführt werden, was aufgrund der Vielzahl möglicher Einsatzmöglichkeiten derartiger Sensoren fast unmöglich ist.

Die DE 10 2008 045 841 A1 offenbart beispielsweise die Bestimmung der Sensorlebenszeit oder eines Kalibrierzeitpunkts durch Ermittlung und Auswertung von Prognosewerten oder Prognoseintervallen, welche im Zusammenhang mit den tatsächlichen Einsatzbedingungen des Sensors stehen.

Die US 2010/0032583 A1 offenbart ein System, bei welchem die Position der einfallenden Strahlung auf dem sensitiven Element verändert und zudem die Intensität der einfallenden Strahlung angepasst werden kann. Auf diese Weise kann die Grösse oder Intensität der Fluoreszenzantwort auf einem gleichbleibenden Niveau gehalten werden, indem einerseits bei nachlassender Sensitivität die Intensität der einfallenden Strahlung einfach erhöht oder angepasst wird. Andererseits kann zudem das sensitive Element länger verwendet werden, da die Position der einfallenden Strahlung auf dem sensitiven Element verändert werden kann, wenn die bislang verwendete Stelle so stark ausgebleicht ist, dass das Messergebnis beeinflusst wird. Nachteilig an dieser Ausgestaltung ist, dass im Sensor zusätzlich ein System zur Positionierung der einfallenden Strahlung vorhanden sein muss. Der Sensor erhält dadurch einen komplexeren Aufbau und ist zudem weniger robust, da ein verschiebbarer oder veränderbarer Strahlengang sehr anfällig auf mechanische Belastungen ist.

Als Aufgabe ergibt sich daher die Entwicklung eines Verfahrens zum Betreiben eines optochemischen Sensors, welches es ermöglicht die Messleistung des Sensors zu verbessern, wobei der Sensor zudem im Wesentlichen unabhängig von der Alterung seines sensitiven Elements eine gleichbleibende Messgenauigkeit ohne wesentliche Veränderung der Ansprechzeit aufweisen soll. Zudem soll das Verfahren eine möglichst effiziente Nutzung des sensitiven Elements bei möglichst geringer Strahlungsbelastung desselben ermöglichen.

Gelöst wird diese Aufgabe durch ein Verfahren nach Anspruch 1 zum Betreiben eines optochemischen Sensors, welcher ein Gehäuse, eine Strahlungsquelle, einen Detektor und ein sensitives Element aufweist. Die Strahlungsquelle und der Detektor sind im Gehäuse des Sensors angeordnet. Weiterhin weist das sensitive Element ein Fluorophor als Signalstoff auf, welcher nach Wechselwirkung mit einem Analyten durch die Strahlungsquelle angeregt werden kann. Das Verfahren zum Betreiben dieses optochemischen Sensors weist mehrere Schritte auf.

Zunächst wird das sensitive Element mit dem Analyten in Kontakt gebracht, so dass der Signalstoff mit dem Analyten wechselwirken kann. Anschliessend wird der Signalstoff durch die Strahlungsquelle mit Strahlung einer ersten Intensität angeregt. Aus der jeweiligen Strahlungsantwort wird ein erstes Rohsignal an einem ersten Zeitpunkt und anschliessend ein zweites oder weiteres Rohsignal an einem zweiten oder weiteren Zeitpunkt bestimmt, wobei das erste, zweite und/oder weitere Rohsignal eine Funktion des Analytgehalts ist. Anschliessend wird ein erster Vergleichswert berechnet, welcher mindestens von zwei oder mehr Rohsignalen abhängig ist. Anhand dieses Vergleichswerts wird durch Vergleich mit einem vorgegebenen ersten Grenzwert der in einer Filterfunktion enthaltene Glättungsfaktor überprüft. Die Filterfunktion dient dazu, die Rohsignale in verarbeitete Signale und/oder Messwerte zu überführen. Wenn der erste Vergleichswert grösser oder gleich dem ersten Grenzwert ist, dann wird der Glättungsfaktors angepasst und die erste Strahlungsintensität eingestellt. Ist der erste Vergleichswert jedoch kleiner als der erste Grenzwert, so wird ein zweiter Vergleichswert berechnet und der Glättungsfaktor und/oder die eingestellte Strahlungsintensität aufgrund eines Vergleichs des zweiten Vergleichswerts, welcher mindestens von zwei oder mehr Rohsignalen abhängig ist, mit einem vorgegebenen zweiten Grenzwert überprüft und angepasst.

Die Berechnung und Verwendung zweier Vergleichswerte ist vorteilhaft, da so sowohl schnelle als auch langsame Änderungen des Messmediums erfasst und berücksichtigt werden können. Solange das Messmedium und insbesondere der Analytgehalt nicht stabil ist, wird die grössere erste Strahlungsintensität verwendet, da mit der grösseren ersten Strahlungsintensität ermittelte Rohsignale aufgrund der höheren Strahlungsintensität ein besseres Signal-Rausch-Verhältnis aufweisen. Die Rohsignale können wiederum mittels der Filterfunktion in verarbeitete Signale und/oder Messwerte überführt werden.

Zum Überprüfen und Anpassen des Glättungsfaktors und/oder der Strahlungsintensität kann der zweite Vergleichswert mit dem zweiten Grenzwert verglichen werden. Wenn der zweite Vergleichswert grösser oder gleich dem zweiten Grenzwert ist, so wird der Glättungsfaktor um ein vorgegebenes Inkrement erhöht, wodurch die Wirkung der Filterfunktion verringert wird.

Ist der zweite Vergleichswert kleiner als der zweite Grenzwert, so wird der Glättungsfaktor um ein vorgegebenes Inkrement erniedrigt und so die Wirkung der Filterfunktion verstärkt. Zudem wird der Glättungsfaktor mit einem Referenz-Glättungsfaktor verglichen. Ist der neue Glättungsfaktor grösser als der Referenz-Glättungsfaktor, so werden die folgenden Messungen und Berechnungen mit diesem neuen Glättungsfaktor durchgeführt. Ist der Glättungsfaktor kleiner oder gleich dem Referenz-Glättungsfaktor und der Analytgehalt im Wesentlichen stabil, so wird zusätzlich zur Erniedrigung des Glättungsfaktors um ein Inkrement die Strahlungsintensität auf die zweite Strahlungsintensität angepasst, wobei die zweite Strahlungsintensität kleiner ist als die erste Strahlungsintensität.

Die Schritte der Bestimmung eines zweiten oder weiteren Rohsignals, die Berechnung des Vergleichswerts sowie die nachfolgenden Schritte können solange wiederholt werden, bis ein vorgegebenes Abbruchkriterium erfüllt ist.

Die zweite Strahlungsintensität ist kleiner als die erste, so dass die Strahlungsbelastung des sensitiven Elements auf diese Weise reduziert wird, solange der Sensor stabile Rohsignale liefert und das Messmedium, insbesondere der Analytgehalt, im Wesentlichen stabil ist. Vorzugsweise wird das Verfahren anfangs mit der höheren Anfangs- oder ersten Strahlungsintensität betrieben, welche während des Verfahrens in Abhängigkeit der ermittelten Relation zwischen Vergleichs- und Grenzwert angepasst wird. Vorzugsweise ist der verwendete Grenzwert abhängig von der verwendeten Strahlungsintensität, so dass für die erste oder eine weitere Strahlungsintensität unterschiedliche Grenzwerte vorgegeben werden. Der Grenzwert stellt ein Mass für eine erlaubte Änderung des Analytgehalts dar, innerhalb der der Analytgehalt als im Wesentlichen stabil angesehen wird. Die Schritte der Bestimmung weiterer Rohsignale, die Ermittlung des Vergleichswerts sowie die nachfolgenden Schritte können solange wiederholt werden, bis ein vorgegebenes Abbruchkriterium erfüllt ist.

Als "Mass für die erlaubte Änderung des Analytgehalts" wird hier ein Wert oder ein Bereich bezeichnet in welchem der Analytgehalt im Wesentlichen stabil ist und sich nicht wesentlich ändert. Der Grenzwert kann entweder werksseitig für einen Sensor oder eine bestimmte Applikation vorgegeben werden oder vom Benutzer festgelegt werden.

Dieses Verfahren ist sehr vorteilhaft, da so die Strahlungsintensität immer an die aktuell im Messmedium vorliegenden Bedingungen angepasst werden kann und die Strahlungsbelastung des Sensors, insbesondere des sensitiven Elements minimiert werden kann. Das Verfahren ermöglicht somit, dass die Messgenauigkeit des Sensors langfristig oder zumindest längerfristig ohne Austausch des sensitiven Elements erhalten und auf Änderungen des Analytgehalt rasch durch eine Anpassung der Strahlungsintensität reagiert werden kann werden.

Zur Vergleichswertberechnung können einzelne und/oder mehrere Rohsignale und/oder verarbeitete Signale, welche aus den Rohsignalen berechnet werden können, herangezogen werden. Vorzugsweise umfasst der Vergleichswert eine Funktion des aktuellen Rohsignals sowie des Mittelwerts über die vorangehenden bearbeiteten Signale oder eine Funktion eines Mittelwerts über das aktuelle und die vorangehenden bearbeiteten Signale sowie eines Mittelwerts über die vorangehenden bearbeiteten Signale. Der Vergleichswert stellt somit ein Mass für die Änderung des aktuellen Rohsignals zu dem oder den vorangehenden Signalen und/oder Rohsignalen dar und lässt über den Vergleich mit dem mindestens einen Grenzwert Rückschlüsse auf die Stabilität oder die Änderung des Analytgehalts zu.

Die Belichtung oder Bestrahlung des sensitiven Elements und damit die Strahlungsintensität wird somit adaptiv an die im Messmedium vorherrschenden Bedingungen angepasst, so dass bei im Wesentlichen konstanten Rohsignalen und damit im Wesentlichen stabilem Analytgehalt mit einer geringeren Strahlungsintensität und sobald sich eine Änderung zeigt mit einer höheren Strahlungsintensität gemessen wird. Auf diese Weise wird die Strahlenbelastung des sensitiven Elements insgesamt verringert, da nur dann mit der höheren Strahlungsintensität eingestrahlt und gemessen wird, wenn sich das Messmedium, insbesondere der Analytgehalt, ändert und somit Rohsignale mit einer besseren Signalstärke und Qualität benötigt werden. Solange der Analytgehalt im Wesentlichen stabil ist und sich nicht wesentlich ändert, ist es meist ausreichend, die Rohsignale mit der niedrigen Strahlungsintensität in einer etwas niedrigeren Qualität zu ermitteln.

Von der ersten zur zweiten niedrigeren Strahlungsintensität kann beispielsweise gewechselt werden, wenn die Phasenabweichung der gemessenen Rohsignale gering ist, also wenn der vorgegebene Grenzwert nicht überschritten wird. Solange das Rohsignal und damit der Analytgehalt im Messmedium im Wesentlichen stabil sind, ist auch die gemessene Phase im Wesentlichen konstant.

Ferner umfasst das Verfahren als weiteren Schritt die Überprüfung und Anpassung eines Glättungsfaktors, welcher in mindestens einer Filterfunktion zur Überführung der Rohsignale in verarbeitete Signale und/oder Messwerte einfliesst.

Eine Anpassung des Glättungsfaktors bewirkt eine Verstärkung oder Abschwächung der Filterfunktion. Auf diese Weise können aus den Rohsignalen unabhängig von der eingesetzten Strahlungsintensität verarbeitete Signale mit im Wesentlichen gleichem Signal-Rausch-Verhältnis berechnet werden.

Der Glättungsfaktor kann in Abhängigkeit der verwendeten Strahlungsintensität ausgewählt werden, so dass für jede verwendete Strahlungsintensität ein bestimmter Glättungsfaktor vorgegeben wird und der Einfluss der unterschiedlichen Strahlungsintensität auf die Signalgrösse der Rohsignale rechnerisch kompensiert werden kann.

Eine an die verwendete Strahlungsintensität angepasste Filterfunktion und ein angepasster Glättungsfaktor sind besonders vorteilhaft, da so unter anderem das Rauschen reduziert werden kann, was bei einer reinen Reduktion der Strahlungsintensität verstärkt wird. Die Verwendung der ersten, höheren Strahlungsintensität führt zu Rohsignalen, welche vergleichsweise weniger verrauscht sind als die, die unter Verwendung der zweiten, geringeren Strahlungsintensität ermittelt werden. Daher kann die erste Filterfunktion eine schwächere Glättung der Rohsignale bewirken als die zweite Filterfunktion, ohne dass die Ansprechzeit oder die Messgenauigkeit des Sensors beeinflusst wird.

Zur Vergleichswertberechnung können einzelne und/oder mehrere Rohsignale und/oder verarbeitete Signale herangezogen werden. Vorzugsweise umfasst der erste Vergleichswert eine Funktion des aktuellen Rohsignals sowie des Mittelwerts über die vorangehenden verarbeiteten Signale. Der zweite Vergleichswert umfasst vorzugsweise eine Funktion eines Mittelwerts über das aktuelle bearbeitete und die vorangehenden bearbeiteten Signale, sowie eines Mittelwerts über die vorangehenden bearbeiteten Signale.

Die Berechnung eines verarbeiteten Signals kann mittels mindestens einer Filterfunktion aus einem Rohsignals erfolgen, wobei auch weitere mathematische Berechnungen, beispielsweise Umrechnungen in die Berechnung des verarbeiteten Signals, einfliessen können.

Vorteilhaft ist ein Verfahren, bei dem eine in Abhängigkeit der eingesetzten Strahlungsintensität gewählte erste, zweite und/oder weitere Filterfunktion verwendet wird. Besonders vorteilhaft ist es, wenn die verwendeten Filterfunktionen im Wesentlichen gleich sind und sich nur in ihrer Filterstärke, insbesondere nur im Glättungsfaktor, unterscheiden, wie zum Beispiel der Anzahl von Rohsignalen über welche gemittelt wird. Bei Verwendung einer hohen Strahlungsintensität kann eine schwächere Filterfunktion eingesetzt werden, als bei Verwendung einer niedrigeren Strahlungsintensität.

Zur Vergleichswertberechnung können Rohsignale und/oder verarbeitete Signale verwendet werden oder in diese einfliessen.

Vorzugsweise werden die Rohsignale mit einer konstanten Abtastrate ermittelt, so dass die einzelnen Rohsignale zeitlich äquidistant sind. Auf diese Weise bleibt die Ansprechzeit von Änderungen der Verfahrensparameter oder des Messmediums bei der Durchführung des erfindungsgemässen Verfahrens weitestgehend unbeeinflusst.

Vorzugsweise kann die erste und/oder zweite Filterfunktion eine exponentielle Glättung umfassen, wobei der Glättungsfaktor in Abhängigkeit der verwendeten ersten oder zweiten Strahlungsintensität gewählt wird. Diese Methode ist eine stabile und einfach zu implementierende Glättungsmethode.

Weiterhin können die Rohsignale, die verarbeiteten Signale, der mindestens eineVergleichswert, der mindestens eine Grenzwert, die mindestens eine Filterfunktion sowie die Glättungsfaktoren in einen mit dem Sensor in Verbindung stehenden Schreib-Lese-Speicher eingeschrieben oder aus diesem ausgelesen werden.

Zusätzlich kann durch eine mathematische Berechnung die verbleibende Einsatzdauer des sensitiven Elements in Abhängigkeit der verwendeten Strahlungsintensität bestimmt oder abgeschätzt werden, welche sich aufgrund der Anwendung des zuvor beschriebenen Verfahrens im Vergleich zu herkömmlich betriebenen Sensoren stark verlängert.

Ein optochemischet Sensor zur Durchführung des erfindungsgemässen Verfahrens weist ein Gehäuse, eine Strahlungsquelle, einen Detektor und ein sensitives Element auf, wobei die Strahlungsquelle und der Detektor im Gehäuse angeordnet sind, und wobei das sensitive Element einen Signalstoff aufweist, welcher nach Wechselwirkung mit einem Analyten durch die Strahlungsquelle anregbar ist, so dass Rohsignale mit dem Detektor erfasst werden können, wobei die Rohsignale eine Funktion des Analytgehalts sind. Der Sensor zeichnet sich dadurch aus, dass die Strahlungsquelle Strahlung mit einer ersten und mindestens einer zweiten Strahlungsintensität erzeugt, welche durch Vergleich von einem Vergleichswert und einem Grenzwert, welcher ein Mass für die erlaubte Änderung des Analytgehalts darstellt, ausgewählt werden. Der optochemische Sensor kann zudem einen Prozessor aufweisen und/oder mit einem Prozessor zusammenwirken, in welchem mindestens eine Filterfunktion hinterlegt ist, mittels der der erste, zweite und/oder weitere Rohwert in ein erstes, zweites und/oder weiteres verarbeitetes Signal überführbar ist. Vorzugsweise weist der Prozessor zudem einen Schreib-Lese-Speicher auf.

Vorzugsweise wird der aktuelle Rohwert in Abhängigkeit der verwendeten Strahlungsintensität mit mindestens einer Filterfunktion geglättet, welche vorzugsweise einen von der Strahlungsintensität abhängigen Glättungsfaktor aufweist. Vorzugsweise dient der Sensor zur Gehaltsbestimmung von mindestens einem Analyten in einem fluiden Messmedium.

Der Signalstoff kann ein sauerstoffsensitives Fluorophor aufweist und der Sensor zur Sauerstoffmessung ausgebildet sein.

In einem Messinstrument mit einem Sensor und einem Prozessor, kann ein Software-Programm zur Durchführung des erfindungsgemässen Verfahrens hinterlegt werden.

Das erfindungsgemässe Verfahren wird anhand der folgenden Figuren näher beschrieben, wobei gleiche Elemente mit denselben Bezugszeichen versehen sind. Es zeigen:

Fig. 1    Eine schematische Darstellung eines optochemischen Sensor mit einem sensitiven Element, welches einen Signalstoff aufweist;

Fig. 2    eine Darstellung eines Verfahrens zum Betreiben eines optochemischen Sensors als Fliessschema;

Fig. 3    eine Darstellung eines erfindungsgemässen Verfahrens als Fliessschema;

Fig. 4    ein Vergleich der Alterungseffekte auf die Rohsignale bei Betrieb eines Sensors mit einem bekannten und einem erfindungsgemässen Verfahren;

Fig. 5    ein Diagramm, welches die Rohsignale und die verarbeiteten Signale vergleichend darstellt;

Fig. 6    ein Konzentrations-Zeit-Diagramm zum Vergleich einer mit dem erfindungsgemässen Verfahren bestimmten Messkurve und einer mit einem bekannten Verfahren ermittelten Messkurve;

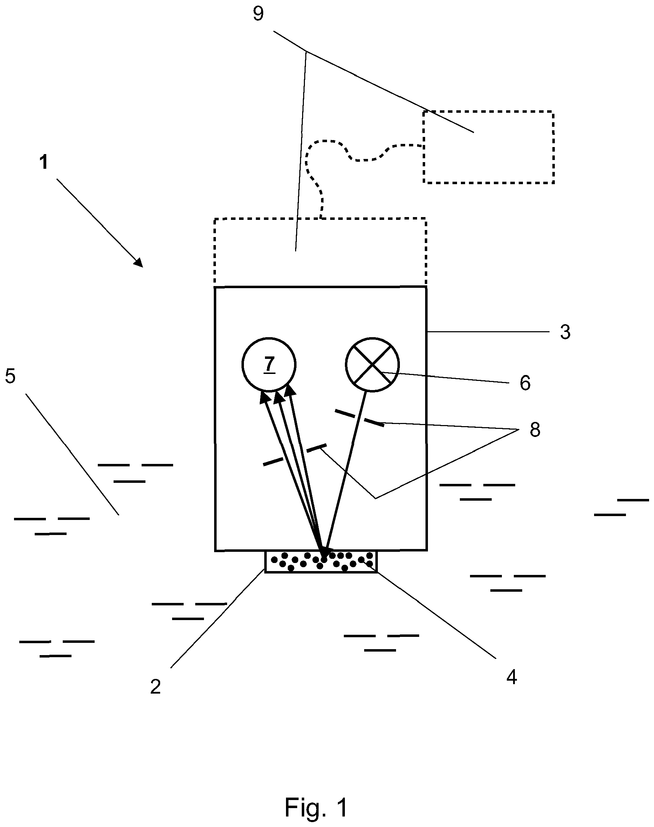

Figur 1 zeigt einen optochemischen Sensor 1, welcher ein sensitives Element 2 aufweist. Das sensitive Element 2 ist lösbar mit einem Sensorgehäuse 3 verbunden, so dass das sensitive Element 2 ausgetauscht werden kann, wenn dieses oder ein darin angeordneter Signalstoff 4 verbraucht oder gealtert ist. Das sensitive Element 2 steht im Betrieb, wie hier angedeutet, mit dem Messmedium 5 in direktem Kontakt. Das sensitive Element 2 kann beispielsweise eine Matrix aus einem polymeren oder keramischen Werkstoff sein, in der der Signalstoff 4, ein Fluorophor, gelöst oder eingelagert ist.

Im Inneren des Sensorgehäuses 3 sind eine Strahlungsquelle 6 und ein Detektor 7 angeordnet. Die von der Strahlungsquelle 6 ausgesandte Strahlung wird durch geeignete, hier nur angedeutete optische Elemente 8, wie Filter, Spiegel, Blenden oder Linsen, auf oder in das sensitive Element 2 gelenkt, wo diese mit dem Signalstoff 4 wechselwirken kann. Anschliessend wird die Signalantwort zum Detektor 7 gelenkt und dort detektiert. Zur Ansteuerung und Verarbeitung der aufgefangenen Signale weist der Sensor 1 noch eine Steuer- und/oder Regeleinheit 9 auf, welche sowohl als externe Einheit oder auch ganz oder teilweise im Sensorgehäuse angeordnet sein kann. Die Steuer- und/oder Regeleinheit 9 kann drahtgebunden oder drahtlos mit dem Sensor verbunden sein. Verschiedene Varianten der Steuer- und/oder Regeleinheit sind bekannt und daher hier nur angedeutet.

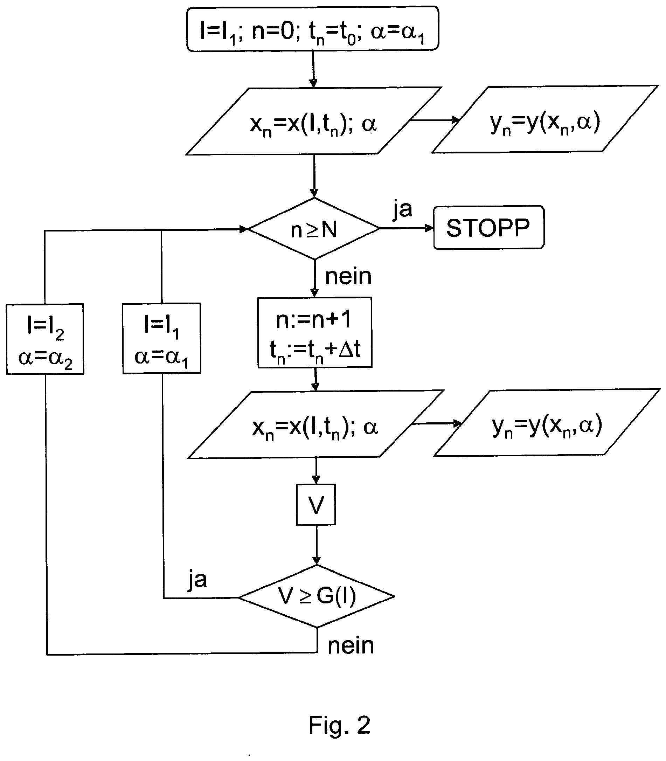

Figur 2 zeigt ein Verfahren zum Betreiben eines optochemischen Sensors in Form eines Fliessschemas. Zu Beginn einer Messung wird der optochemische Sensor mit Strahlung einer ersten Strahlungsintensität $I = I_1$ angeregt und zu einem ersten Zeitpunkt $t_{n,n=0}$ ein erstes Rohsignal $x_{n,n=0}$ ermittelt. Dieses erste Rohsignal $x_{n,n=0}$ stellt eine Funktion von zumindest dem Analytgehalt im Messmedium, der eingestrahlten Strahlungsintensität $I$ und des Messzeitpunkts $t_{n,n=0}$ dar. Aus dem ersten Rohsignal $x_{n,n=0}$ kann mittels einer Filterfunktion ein erstes verarbeitetes Signal $y_{n,n=0} = y_{(xn,n=0,\alpha)}$ bestimmt werden, welches entweder direkt als Messwert ausgegeben oder in den Messwert überführt werden kann. Die Filterfunktion weist einen Glättungsfaktor $\alpha$ auf, dessen Wert hiervon der verwendeten Strahlungsintensität $I$ abhängig ist.

Der Zähler $n$ erhöht sich fortlaufend, je länger die Messung dauert, wobei das Ende der Messung sowohl durch den Benutzer als auch durch das zu untersuchende Messmedium bestimmt werden kann, beispielsweise wird bei oder kurz nach Abschluss eines Prozesses oder einer Reaktion auch die Messung beendet werden. Dieses Ende ist hier durch die Abfrage des Abbruchkriteriums $n \geq N$ dargestellt. Ist das Abbruch-Kriterium erfüllt, so wird die Messung gestoppt.

Ist das Abbruchkriterium noch nicht erfüllt, so wird der Zähler erhöht, $n:=n+1$, und ein zweites oder weiteres Rohsignal $x_{n, n:=n+1}$ zum Zeitpunkt $t_{n, n:=n+1} = t_n + \Delta t$ erfasst und aus diesem ein weiteres verarbeitetes Signal $y_{n, n:=n+i} = y(x_{n, n:=n+1,\alpha})$ berechnet.

Anschliessend wird mindestens ein Vergleichswert $V$ ermittelt. Dieser Vergleichswert $V$ kann beispielsweise eine Relation zwischen mindestens zwei zeitlich beabstandeten Rohsignalen oder eine Relation zwischen durch weitere mathematische Operationen oder Funktionen veränderte oder verarbeitete Rohsignale umfassen. Die Rohsignale können dabei unterschiedlich weiterbearbeitet worden sein. Eine Möglichkeit zur Bearbeitung des Rohsignals stellt beispielsweise eine Glättung mit einer Glättungsfunktion, eine Mittelung über mehrere Rohsignale oder die Berechnung einer Ableitung über die Zeit dar. Diese Möglichkeiten der Bearbeitung sind hier nur beispielhaft aufgezeigt, selbstverständlich können auch weitere mathematische Funktionen und/oder Operationen zur Bearbeitung verwendet werden.

Vorzugsweise wird der Vergleichswert $V$ als Funktion von zumindest dem aktuellen Rohsignal $x_n$ und dem vorangegangenen verarbeiteten Signal $y_{n-1}$ ermittelt. Zudem ist es möglich den Vergleichswert $V$ unter Einbeziehung eines Mittelwerts über alle oder einen Teil der vorangegangenen Rohsignale $x_n, x_{n-1}, ..., x_0$ oder verarbeiteten Signale $y_n, y_{n-1}, ..., y_0$ zu berechnen, wobei das aktuelle Rohsignal $x_n$ und/oder das aktuelle verarbeitete Signal $y_n$ ebenfalls zur Mittelwertberechnung herangezogen werden kann. Weiterhin kann ein aktuelles Rohsignal $x_n$ und/oder ein aktuelles geglättetes bzw. verarbeitetes Signal $y_n$ mit einem oder einer Reihe oder einem Mittelwert von zeitlich vorangehenden geglätteten Signalen $y_n, y_{n-1}, ..., y_0$ verglichen werden.

Der ermittelte Vergleichswert $V$ wird mit mindestens einem vorgegebenen Grenzwert $G$ verglichen, dessen Wert von der verwendeten Strahlungsintensität $I$ abhängig ist. Der Grenzwert $G$ ist vorzugsweise eine Konstante und kann sowohl produktionsseitig für jeden Sensor oder Sensortyp festgelegt werden oder auch vom Kunden aufgrund des Einsatzgebiets gewählt werden. Es ist beispielsweise denkbar, dass bei einer unbekannten, instabilen Reaktion der Grenzwert oder der Grenzwertbereich enger gewählt wird als bei einer bekannten, stabilen Reaktion. Der Grenzwert oder der Grenzwertbereich kann somit an den verwendeten Sensor und/oder die bei der Messung vorherrschenden Bedingungen angepasst werden. Der Grenzwert stellt somit ein Mass für die erlaubte Änderung des Analytgehalts dar, innerhalb der der Analytgehalt als im Wesentlichen stabil angesehen wird.

Wenn der Vergleichswert $V$ grösser als oder gleich dem Grenzwert $G$ ist, so werden weitere Messungen mit der ersten Strahlungsintensität $I_1$ durchgeführt.

Wenn der Vergleichswert $V$ jedoch kleiner ist als der Grenzwert, so wird die Strahlungsintensität auf eine zweite Strahlungsintensität $I=I_2$ mit $I_2<I_1$ reduziert und weitere Messungen mit der zweiten Strahlungsintensität $I_2$ durchgeführt. In diesem Fall verhält sich das Messmedium im Wesentlichen stabil, so dass der Sensor mit einer geringeren Strahlungsintensität betrieben werden kann.

Der adaptive Wechsel der Strahlungsintensitäten in Abhängigkeit des Vergleichswerts $V$ und damit in Abhängigkeit der aktuellen Rohsignale $x_n$ geht einher mit einer Anpassung des Glättungsfaktors $\alpha$. Damit die Qualität der Messwerte, insbesondere das Signal-Rausch-Verhältnis, sich trotz Änderung der Strahlungsintensität nicht ändert, wird bei Verwendung der zweiten Strahlungsintensität $I_2$ zur Berechnung weiterer verarbeiteter Signale $y_n$ ein zweiter Glättungsfaktor $\alpha_2$ in dieselbe oder

eine weitere Filterfunktion eingesetzt, welcher im Vergleich zum mit der ersten Strahlungsintensität $I_1$ verwendeten ersten Glättungsfaktor $\alpha_1$ eine stärkere Glättung der Rohsignale $x_n$ bewirkt.

Die Rohsignalermittlung, Berechnung der verarbeiteten Signale und des Vergleichswerts, Abfragen und adaptive Anpassung der Strahlungsintensitäten wird solange durchgeführt, bis das Abbruchkriterium $n \geq N$ erreicht ist.

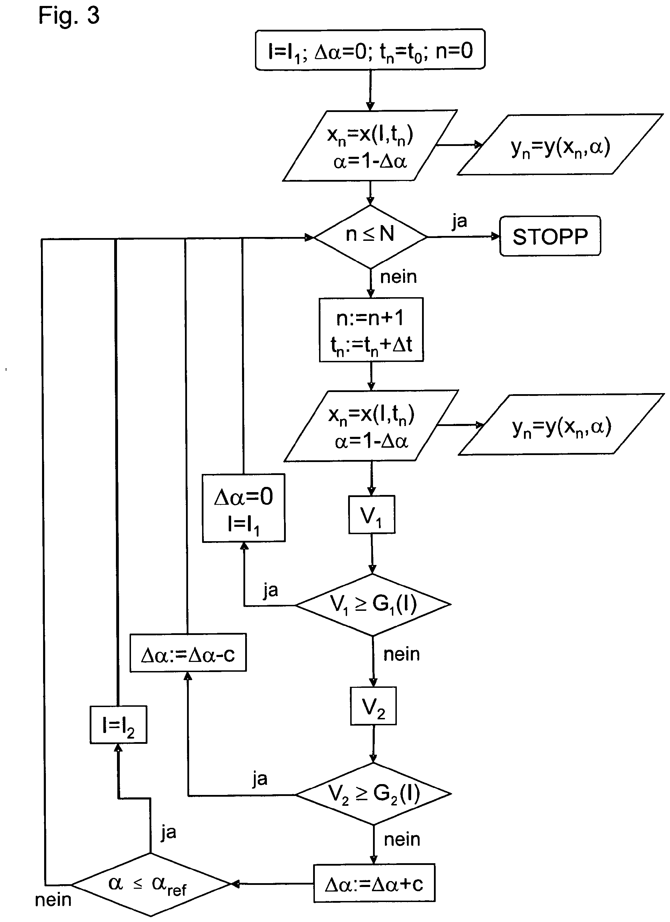

Figur 3 zeigt ein erfindungsgemässes Verfahren als Flussdiagramm, welches sich von dem in Figur 2 gezeigtem Verfahren insbesondere darin unterscheidet, dass neben der adaptiven Anpassung der Strahlungsintensität I auch die adaptive Anpassung des Glättungsfaktors $\alpha$ ins Verfahren einfliesst. Wie bereits vorangehend beschrieben, werden unter Verwendung der ersten Strahlungsintensität $I_1$ ein erstes und mindestens ein zweites oder weiteres Rohsignal $x_n$ an einem ersten, zweiten und/oder einem weiteren Zeitpunkt $t_n$ ermittelt oder gemessen. Aus diesen Rohsignalen $x_n$ wird mittels mindestens einer Filterfunktion jeweils ein verarbeitetes Signal $y_n$ berechnet. Die mindestens eine Filterfunktion enthält jeweils einen Glättungsfaktor $\alpha=1-\Delta\alpha$, welcher in Abhängigkeit der verwendeten Strahlungsintensität I sowie der Stabilität des Rohsignals $x_n$ und damit der Stabilität des Messmediums ausgewählt wird.

Nach Erfassung des ersten und des mindestens zweiten Rohsignals $x_{n-1}$, $x_n$ wird ein erster Vergleichswert $V_1$ ermittelt und dieser mit einem vorgegebenen ersten Grenzwert $G_1$ verglichen, welcher ein Mass für die erlaubte Abweichung des Analytgehalt ist und wobei der Wert des ersten Grenzwerts $G_1(I)$ zudem von der verwendeten Strahlungsintensität I abhängt. Der erste Vergleichswert $V_1$ kann als Funktion von zumindest dem aktuellen Rohsignal $x_n$ und dem vorhergehenden verarbeiteten Signal $y_n$ oder einem Mittelwert der vorhergehenden verarbeiteten Signale y ermittelt werden, wobei für den zur Berechnung der verarbeiteten Signale herangezogenen Glättungsfaktor $0 \leq \alpha \leq 1$ gilt. Vorzugsweise umfasst der erste Vergleichswert $V_1$ eine Funktion des aktuellen Rohsignals $x_n$ sowie des Mittelwerts über die vorhergehenden verarbeiteten Signale $y_{n-1},...,y_0$.

Ist der erste Vergleichswert $V_1$ grösser oder gleich dem ersten Grenzwert $G_1$, so ist das Rohsignal $x_n$ instabil und das Messmedium, genauer dessen Analytgehalt, ändert sich beispielsweise gerade. In diesem Fall wird für die folgenden Rohsignal-Messungen $x_{n,n:=n+1}$ die erste Strahlungsintensität $I_1$ eingestellt oder beibehalten und der Glättungsfaktor $\alpha=1-\Delta\alpha$ mit $\Delta\alpha=0$ so eingestellt, dass das Rohsignal bei der Berechnung des verarbeiteten Signals im Wesentlichen nicht geglättet wird.

Ist der erste Vergleichswert $V_1$ jedoch kleiner als der erste Grenzwert, so wird ein zweiter Vergleichswert $V_2$ berechnet und mit einem zweiten Grenzwert $G_2(I)$ verglichen. Der zweite Vergleichswert $V_2$ kann unter Berücksichtigung eines aktuellen Mittelwerts, welcher das aktuelle sowie die vorangehenden Rohsignale $x_n$, $x_{n-1}$, ..., $x_0$ oder das aktuelle und die vorangehenden verarbeiteten Signale $y_n$, $y_{n-1}$, ..., $y_0$ umfasst, und des zeitlich vorangehenden Mittelwerts, welcher die vorangehenden Rohsignale $x_{n-1}$, ..., $x_0$ oder die vorangehenden verarbeiteten Signale $y_{n-1}$, ..., $y_0$ umfasst, berechnet werden. Vorzugsweise umfasst der zweite Vergleichswert $V_2$ eine Funktion eines Mittelwerts über das aktuelle bearbeitete und die vorangehenden bearbeiteten Signale $y_n$, $y_{n-1},...,y_0$, sowie eines Mittelwerts über die vorangehenden bearbeiteten Signale $y_{n-1},...,y_0$.

Der Wert des zweiten Grenzwerts $G_2$ ist ein Mass für die erlaubte Änderung des Analytgehalts und hängt zudem von der verwendeten Strahlungsintensität I ab. Die Grenzwerte $G_1$, $G_2$ sind jeweils eine Konstante und können beispielsweise produktionsseitig für jeden Sensor oder Sensortyp festgelegt werden.

Der erste Vergleichswert $V_1$ dient somit der raschen Überprüfung der Stabilität des Messmediums. Der zweite Vergleichswert $V_2$ ist präziser und dient zur genaueren Überprüfung der Stabilität des Messmediums. Selbstverständlich wäre es auch denkbar, dass es sich beim ersten und zweiten Vergleichswert $V_1$, $V_2$ um denselben Wert handelt, welcher mit zwei unterschiedlichen Grenzwerten $G_1$, $G_2$ verglichen wird.

Ist der zweite Vergleichswert $V_2$ grösser oder gleich dem zweiten Grenzwert $G_2$, so werden die folgenden Messungen mit derselben Strahlungsintensität I durchgeführt, die Berechnung der verarbeiteten Signale jedoch mit einem grösseren Glättungsfaktor $\alpha=1-\Delta\alpha$ mit $\Delta\alpha:=\Delta\alpha-c$, also einer geringeren Glättung, durchgeführt. Der Glättungsfaktor $\alpha$ kann Werte zwischen $0 \leq \alpha \leq 1$ annehmen, wobei die Glättung mit kleinerem Glättungsfaktor $\alpha$ zunimmt.

Ist der zweite Vergleichswert $V_2$ kleiner als der zweite Grenzwert $G_2$, so ist das Rohsignal $x_n$ und damit auch das Messmedium im Wesentlichen stabil. In diesem Fall wird überprüft, ob der Glättungsfaktor $\alpha$ bereits einen Referenz-Glättungsfaktor $\alpha_{ref}$ erreicht hat.

Wenn der aktuelle Glättungsfaktor $\alpha$ grösser als der Referenz-Glättungsfaktor $\alpha_{ref}$ ist, so wird die Glättung verstärkt, indem der Glättungsfaktor $\alpha=1-\Delta\alpha$, mit $\Delta\alpha:=\Delta\alpha+c$ weiter verringert wird.

Ist der aktuelle Glättungsfaktor $\alpha$ jedoch kleiner als der Referenz-Glättungsfaktor $\alpha_{ref}$ und der Analytgehalt im Wesentlichen stabil, so wird die Glättung $\alpha=1-\Delta\alpha$, mit $\Delta\alpha:=\Delta\alpha+c$ verstärkt und zudem eine zweite Strahlungsintensität $I_2$ eingestellt, welche kleiner bzw. geringer ist als die erste Strahlungsintensität $I_1$.

Die Rohsignalermittlung, Berechnung der Vergleichswerte und verarbeiteten Signale, Abfragen und adaptive Anpassung der Strahlungsintensitäten werden solange durchgeführt, bis das Abbruchkriterium $n \geq N$ erreicht ist.

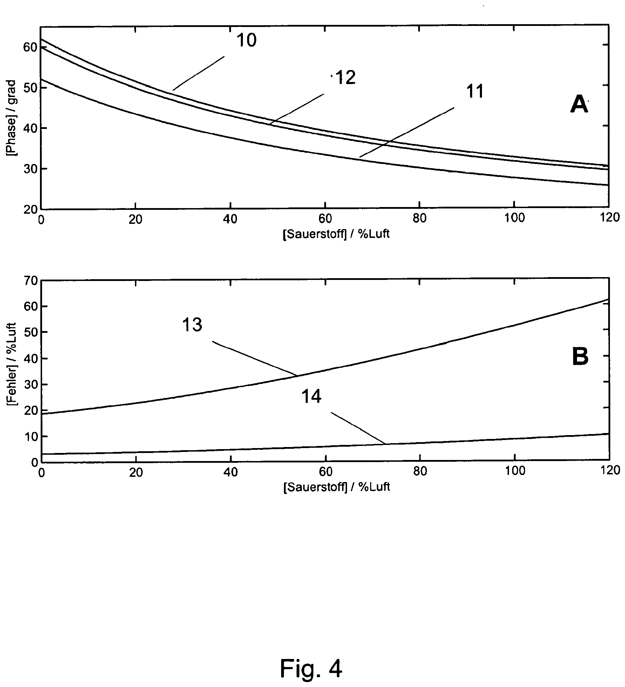

Die Auswirkungen des adaptiven Wechsels der Strahlungsintensität I und/oder des Glättungsfaktors $\alpha$ wird anhand der in der Figuren 4 bis 6 gezeigten Diagramme deutlich.

Figur 4 zeigt in Diagramm A Phasen-Konzentrations-Kurven und in Diagramm B Kurven des konzentrationsabhängigen Messfehlers, um die Vorteile des erfindungsgemässen Verfahrens gegenüber dem herkömmlichen Verfahren im Vergleich zu Messungen mit einem neuwertigen sensitiven Element darzustellen.

Die in Diagramm A gezeigten Kurven wurden mit einem InPro6870i Sensor von Mettler-Toledo aufgezeichnet und stellen die Relation der Phase gegen die Sauerstoff-Konzentration dar. Der Aufbau eines InPro6870i Sensors ist stark schematisiert in Figur 1 gezeigt. InPro6870i Sensoren sind vorkalibrierte Sensoren, welche mit einem relativ kleinen Messfehler von ca. $\pm 1\%$ spezifiziert sind.

Eine erste Kurve 10 im Diagramm A entspricht dem Verhalten des Sensors mit einem neuen, noch nicht gealterten sensitiven Element. Eine zweite Kurve 11 entspricht dem Verhalten des Sensors mit einem gealterten sensitiven Element. Die Kurven 10, 11 wurden mit einer ersten Strahlungsintensität $I_1$ ermittelt. Eine dritte Kurve 12 zeigt wie sich die Phase gegen die Sauerstoff-Konzentration über die Lebensdauer eines sensitiven Elements ändert, wenn der Sensor im Wesentlichen mit einer im Vergleich zu den beiden anderen Kurven 10, 11 reduzierten Intensität $I_2$ betrieben wurde, wobei die Strahlungsintensität auf ca. 1/5 der ursprünglichen Strahlungsintensität $I_1$ verringert wurde.

Anhand von Diagramm A ist leicht zu erkennen, dass ein Sensor mit einem gealterten sensitiven Element im Vergleich zum selben Sensor mit einem neuen sensitiven Element eine verschobene und insbesondere verringerte Phase aufweist. Dieses schlägt sich insbesondere im konzentrationsabhängigen Messfehler nieder, welcher als Kurve 13 im Diagramm B gezeigt ist.

Die Abweichung zwischen der dritten Kurve 12 und der ersten Kurve 10, welche mit dem neuen sensitiven Element aufgenommen wurde, ist deutlich kleiner als die Abweichung zur zweiten Kurve 11, welche mit dem gealterten sensitiven Element durchgeführt wurde. Hieraus lässt sich ableiten, dass wenn ein sensitives Element mit einer verringerten Strahlungsintensität betrieben wird, dessen Alterung verlangsamt und somit die Einsatzdauer entscheidend verlängert werden kann. Das erfindungsgemässe Verfahren baut auf dieser Tatsache auf, wobei die Strahlungsintensität während eines Prozesses adaptiv angepasst wird, so dass auch schnelle Änderungen des Rohsignals aufgrund von Änderungen im Messmedium erfasst werden können.

Diagramm B zeigt Kurven des konzentrationsabhängigen Messfehlers, wie er sich aus den in Diagramm A gezeigten Kurven 10, 11, 12 ableitet. Eine Kurve 13 zeigt den Messfehler für das gealterte sensitive Element, welches mit einer ersten Strahlungsintensität $I_1$ vermessen wurde, und Kurve 14 zeigt den Messfehler für das sensitive Element, welches mit einer zweiten, niedrigeren Strahlungsintensität $I_2$ betrieben wurde.

Aus Diagramm B ist zu erkennen, dass der Fehler bei Verwendung eines gealterten sensitiven Elements mit steigender Sauerstoff-Konzentration ansteigt, so dass, wenn ein unkalibrierter Sensor mit einem veralteten sensitiven Element betrieben wird, der aus der Phase berechnete Sauerstoff-Gehalt bzw. die Sauerstoff-Konzentration einen zunehmenden Fehler aufweist.

Hingegen ist der Fehler bei Verwendung einer verringerten Strahlungsintensität deutlich geringer und die Messgenauigkeit ist erheblich besser als bei Verwendung eines gealterten sensitiven Elements unter einer stärkeren Strahlungsintensität.

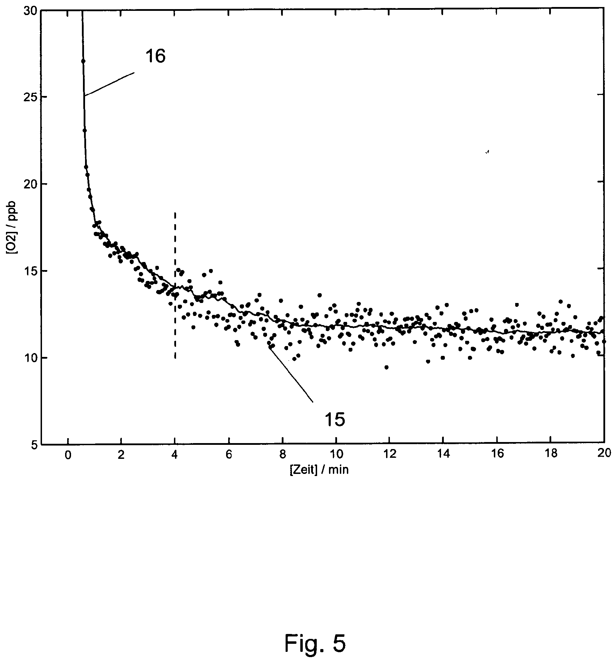

Figur 5 zeigt zwei Messkurven, welche die zeitabhängige Bestimmung des Sauerstoffgehalts visualisieren. Der oben genannte Mettler-Toledo InPro6870i Sensor mit einem neuen sensitiven Element wurde in einer Messzelle zuerst mit Luft und dann mit Stickstoff bei Raumtemperatur und Umgebungsdruck belüftet. Damit wurden die Sauerstoff-Konzentration sowie die Ansprechzeit bestimmt. Die gepunktet eingezeichnete Messkurve 15 zeigt die Phasenwerte der Rohsignale. Am Anfang der Messung wurden die Rohsignale mit einer ersten, hohen Strahlungsintensität $I_1$ gemessen. Die senkrecht eingezeichnete Linie symbolisiert den Zeitpunkt an dem gemäss dem erfindungsgemässen Verfahren, wie es anhand von Figur 3 beschrieben wurde, die Strahlungsintensität auf eine zweite, niedrigere Strahlungsintensität $I_2$ gesenkt und gleichzeitig die Filterung oder Glättung angepasst wurde.

Die geglätteten, verarbeiteten Signale sind in der durchgezogen eingezeichneten Kurve 16 gezeigt und verdeutlichen die Vorteile des erfindungsgemässen Verfahrens.

Zur Berechnung der verarbeiteten Signale kann beispielsweise eine bekannte Filterfunktion verwendet werden, die als exponentielle Glättung bezeichnet wird.

Bei der exponentiellen Glättung wird ein neues verarbeitetes Signal $y_n$ als Funktion des entsprechenden Rohsignals $x_n$, des zeitlich vorangehende verarbeiteten Signals $y_{n-1}$ sowie eines Glättungsfaktors $\alpha$, für den $0 \leq \alpha \leq 1$ gilt, wie folgt berechnet:

$$y_n = \alpha \cdot x_n + (1-\alpha) \cdot y_{n-1}$$

Für $\alpha=1$ ist $\bar{y}_n$ gleich dem ungeglätteten Rohsignal $x_n$ und wird nicht geglättet. Wie bereits vorangehend erwähnt, wird bei schnellen und grossen Änderungen das Rohsignal $x_n$ im Wesentlichen nicht geglättet, um eine Verringerung der Ansprechzeit aufgrund der Glättung im Wesentlichen zu vermeiden. Eine derartige Änderung wurde für die in Figur 5 gezeigte Messung durch Umschaltung des Messmediums zwischen Luft und Stickstoff simuliert. Sobald das Messmedium stabil war, wurde die Strahlungsintensität reduziert und zudem die Filterfunktion verstärkt. Die in Figur 5 durchgezogen eingezeichnete Kurve wurde beispielsweise mit Glättungsfaktoren zwischen ca. $0.03 \leq \alpha \leq 0.1$ erzeugt. Die Messungen wurden mittels des erfindungsgemässen Verfahrens durchgeführt.

Anhand von Figur 5 ist leicht zu erkennen, dass die Reduktion der Strahlungsintensität durch die höhere Filterung im Wesentlichen vollständig kompensiert werden kann.

Die in den Figuren 4 und 5 gezeigten Messungen mit einem Sauerstoffsensor zeigen somit, dass die Messgenauigkeit trotz Anpassung der Strahlungsintensität und der damit verbundenen Anpassung des Glättungsfaktors bzw. der Filterfunktion verbessert, die Alterung des sensitiven Elements stark verzögert und so dessen Einsatzdauer stark verlängert werden konnte.

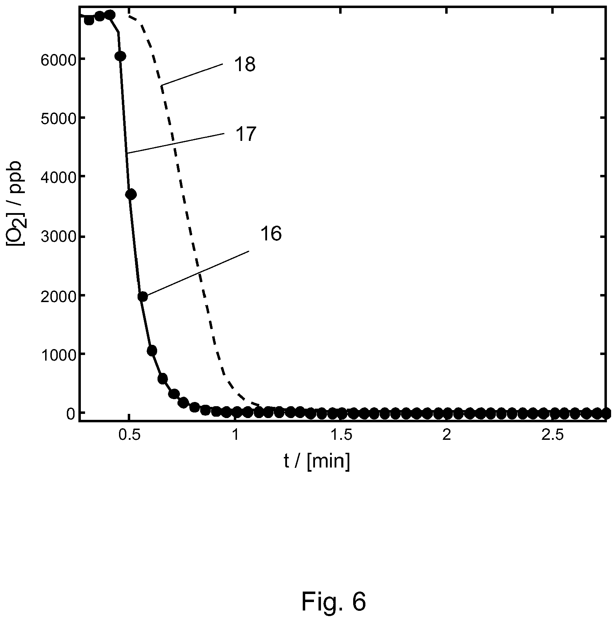

Wie anhand von Figur 3 erläutert, kann zudem auch der Glättungsfaktor $\alpha$, welcher in die Filterfunktion zur Berechnung eines verarbeiteten Signals $y_n$ aus einem Rohsignal $x_n$ dient, adaptiv angepasst werden. Figur 6 zeigt eine zeitabhängige Bestimmung der Sauerstoff-Konzentration mit einem InPro6870i, welcher gemäss dem in Figur 3 beschriebenen Verfahren betrieben wurde. Der Sensor wurde in einer Messzelle zuerst mit Luft und dann mit Stickstoff bei Raumtemperatur und Umgebungsdruck belüftet. Anschliessend wurden Rohsignale aufgenommen und die Ansprechzeit des Sensors bestimmt. Eine erste Kurve 16 zeigt die gemessenen Rohsignale.

Eine zweite und dritte Kurve 17, 18 zeigen die aus den Rohsignalen berechneten verarbeiteten Signale. Die Berechnung der verarbeiteten Signale erfolgte für die zweite Kurve 17 durch eine Mittelwertbildung über den zweiten und dritten Quartil, eine derartige Filterfunktion wird als "moving average" bezeichnet und stellt eine bekannte, häufig eingesetzte Filterfunktion dar. Für die dritte Kurve 18 erfolgte die Berechnung durch eine exponentielle Glättung mit variablem oder adaptiven Glättungsfaktor gemäss dem erfindungsgemässen Verfahren Als Glättungsfunktion wurde die bereits beschriebene exponentielle Glättung herangezogen, wobei der Glättungsfaktor adaptiv angepasst wurde. Die Anpassung des Glättungsfaktors folgte dabei den bereits beschriebenen Abläufen.

Wie man anhand von Figur 6 leicht erkennen kann, hat eine adaptive Änderung der Strahlungsintensität sowie des Glättungsfaktors im Vergleich zum Einsatz einer moving-average-Filterfunktion im Wesentlichen keinen Einfluss auf die Ansprechzeit des Sensors.

Obwohl die Erfindung durch die Darstellung spezifischer Ausführungsbeispiele beschrieben worden ist, fallen zahlreiche weitere Ausführungsvarianten im Schutzumfang der angehängten Ansprüche ein.

**Bezugszeichenliste**

| | |
|---|---|
| 1 | Sensor |
| 2 | sensitives Element |
| 3 | Signalstoff |
| 4 | Gehäuse |
| 5 | Messmedium |
| 6 | Strahlungsquelle |
| 7 | Detektor |
| 8 | optisches Element |
| 9 | Steuer- und/oder Regeleinheit |
| 10 | Messkurve |
| 11 | Messkurve |
| 12 | Messkurve |
| 13 | Messkurve |
| 14 | Messkurve |
| 15 | Messkurve |
| 16 | Messkurve |
| 17 | Messkurve |
| 18 | Messkurve |
| $I, I_1, I_2$ | Intensität |
| $x$ | Rohsignal |
| $y$ | verarbeitetes Signal / gefiltertes Rohsignal |
| $t$ | Zeit |
| $V, V_1, V_2$ | Vergleichswert |
| $G, G_1, G_2$ | Grenzwert |
| $\alpha$ | Glättungsfaktor |
| $\Delta\alpha \pm c$ | Inkrement ($\Delta\alpha \in [0,1]$) |
| $\alpha_{ref}$ | Referenz-Glättungsfaktor |
| $n$ | Zähler |

**Patentansprüche**

1. Verfahren zum Betreiben eines optochemischen Sensors,
   wobei der optochemische Sensor, welcher zur Bestimmung eines Analytgehalts dient, ein Gehäuse, eine Strahlungsquelle, einen Detektor und ein sensitives Element aufweist, wobei die Strahlungsquelle und der Detektor im Gehäuse angeordnet sind, wobei das sensitive Element ein Fluorophor als Signalstoff aufweist, und wobei das Verfahren die folgenden Schritte umfasst:

   a. in Kontaktbringen des sensitiven Elements mit einem Analyten, so dass der Signalstoff mit dem Analyten wechselwirkt;
   b. Anregen des Signalstoffs durch die Strahlungsquelle mit Strahlung einer ersten Strahlungsintensität ($I_1$),
   c. Bestimmen eines ersten Rohsignals ($x_n$), welches eine Funktion des Analytgehalts an einem ersten Zeitpunkt ($t_n$) ist;
   d. Bestimmen eines zweiten und/oder weiteren Rohsignals ($x_{n,n=n+1}$), wobei das zweite und/oder weitere Rohsignal ($x_{n,n=n+1}$) eine Funktion des Analytgehalts an einem zweiten und/oder weiteren Zeitpunkt ($t_{n,n=n+1}$) ist;
   e. Berechnen eines ersten Vergleichswerts ($V_1$), welcher mindestens von zwei oder mehr Rohsignalen ($x_n, x_{n,n:=n+1}$) abhängig ist und ein Mass für die Änderung eines aktuellen Rohsignals zu einem oder mehreren vorangehenden Signalen und/oder Rohsignalen darstellt, und
   f. Überprüfen eines Glättungsfaktors ($\alpha$) mit $0 \leq$

$\alpha \leq 1$, welcher in einer Filterfunktion die Rohsignale ($x_n$) mittels der Filterfunktion in verarbeitete Signale ($y_n$) überführt enthalten ist, aufgrund eines Vergleichs des ersten Vergleichswerts ($V_1$) mit einem vorgegebenen ersten Grenzwert ($G_1$), sowie

   i. Anpassen des Glättungsfaktors $\alpha=1-\Delta\alpha$ mit $\Delta\alpha=0$ und Einstellen der ersten Strahlungsintensität ($I_1$), wenn der erste Vergleichswert ($V_1$) grösser oder gleich dem ersten Grenzwert ($G_1$) ist, wobei das Rohsignal instabil ist, oder
   ii. Ermitteln eines zweiten Vergleichswerts ($V_2$), welcher mindestens von zwei oder mehr Rohsignalen ($x_n$, $x_{n,n:=n+1}$) abhängig ist, wenn der erste Vergleichswert ($V_1$) kleiner ist als der erste Grenzwert ($G_1$), und Überprüfen und Anpassen des Glättungsfaktors ($\alpha$) und/oder der eingestellten Strahlungsintensität ($I$) aufgrund eines Vergleichs des zweiten Vergleichswerts ($V_2$) mit einem vorgegebenen zweiten Grenzwert ($G_2$) anhand der folgenden Schritte:

      • Erhöhen des Glättungsfaktors $\alpha=1-\Delta\alpha$ um ein vorgegebenes Inkrement $\Delta\alpha:=\Delta\alpha-c$, wodurch die Wirkung der Filterfunktion verringert wird, wenn der zweite Vergleichswert ($V_2$) grösser oder gleich dem zweiten Grenzwert ($G_2$) ist,

oder wenn der zweiter Vergleichswert ($V_2$) kleiner als der zweite Grenzwert ($G_2$) ist, wobei das Rohsignal im Wesentlichen stabil ist:

      • Erniedrigen des Glättungsfaktors $\alpha=1-\Delta\alpha$ um ein vorgegebenes Inkrement $\Delta\alpha:=\Delta\alpha+c$, wodurch die Wirkung der Filterfunktion verstärkt wird, und
      • Vergleichen des Glättungsfaktors ($\alpha$) mit einem vorgegebenen Referenz-Glättungsfaktor ($\alpha_{ref}$), und Einstellen einer zweiten Strahlungsintensität ($I_2$), welche kleiner ist als die erste Strahlungsintensität ($I_1$), wenn der Glättungsfaktor ($\alpha$) kleiner oder gleich dem Referenz-Glättungsfaktor ($\alpha_{ref}$) ist;

wobei die Grenzwerte ($G_1$, $G_2$) ein Mass für die erlaubte Abweichung des Analytgehalt sind, und wobei der zweite Vergleichswert ($V_2$) zur genaueren Überprüfung der Stabilität des Messmediums dient;
g. Wiederholen der Schritte d) bis f) bis zum Erreichen eines Abbruchkriteriums $n \geq N$.

2. Verfahren nach Anspruch 1, **dadurch gekennzeichnet, dass** der Glättungsfaktor ($\alpha$) in Abhängigkeit der verwendeten Strahlungsintensität ($I$) ausgewählt wird.

3. Verfahren nach Anspruch 1 oder 2, **dadurch gekennzeichnet, dass** dieses ferner das Berechnen eines ersten, zweiten und/oder weiteren verarbeiteten Signals ($y_n$) aus dem ersten, zweiten und/oder weiteren Rohsignal ($x_n$) mittels der mindestens einen Filterfunktion umfasst.

4. Verfahren nach Anspruch 3, **dadurch gekennzeichnet, dass** zur Berechnung des Vergleichswerts ein Mittelwert herangezogen wird, welcher das aktuelle und/oder die vorangehenden Rohsignale ($x_n, x_{n-1}, ..., x_0$) oder das aktuelle und/oder die vorangehenden verarbeiteten Signale ($y_n, y_{n-1}, ..., y_0$) umfasst.

5. Verfahren nach einem der Ansprüche 1 bis 4, **dadurch gekennzeichnet, dass** die Filterfunktion eine exponentielle Glättung ist.

6. Verfahren nach einem der Ansprüche 1 bis 5, **dadurch gekennzeichnet, dass** dieses als weiteren Schritt eine Berechnung der verbleibenden Einsatzdauer des sensitiven Elements umfasst.

**Claims**

1. A method for operating an optochemical sensor, wherein the optochemical sensor, which is used for determining an analyte content, comprises a housing, a radiation source, a detector, and a sensitive element, wherein the radiation source and the detector are disposed in the housing, wherein the sensitive element has a fluorophore as signaling substance, and wherein the method comprises the following steps:

   a. Bringing the sensitive element into contact with an analyte, such that the signaling substance interacts with the analyte;
   b. Exciting the signaling substance with radiation of a first radiation intensity ($I_1$) by the radiation source;
   c. Determining a first raw signal ($x_n$), which is a function of the analyte content at a first point in time ($t_n$);
   d. Determining a second and/or further raw signal ($x_{n,n=n+1}$), wherein the second and/or further raw signal ($x_{n,n=n+1}$) is a function of the analyte content at a second and/or further point in time ($t_{n,n=n+1}$);
   e. Calculating a first comparison value ($V_1$), which is at least dependent on two or more raw

signals ($x_n$, $x_{n,n:=n+1}$) and represents a measure of the change of a current raw signal compared to one or several preceding signals and/or raw signals; and

f. Verifying a smoothing factor (a), where $0 \leq a \leq 1$, which is contained in a filter function which converts the raw signals ($x_n$) by means of the filter function into processed signals ($y_n$) based on a comparison of the first comparison value (Vi) to a predetermined first threshold value ($G_1$), as well as

i. Adjusting the smoothing factor $\alpha = 1 - \Delta\alpha$ where $\Delta\alpha = 0$ and setting the first radiation intensity ($I_1$) if the first comparison value ($V_1$) is greater than or equal to the first threshold value ($G_1$), wherein the raw signal is unstable, or

ii. Determining a second comparison value ($V_2$), which is at least dependent on two or more raw signals ($x_n$, $x_{n,n:=n+1}$) if the first comparison value ($V_1$) is smaller than the first threshold value ($G_1$), and

Verifying and adjusting the smoothing factor (a) and/or the set radiation intensity (I) based on a comparison of the second comparison value ($V_2$) to a predetermined second threshold value ($G_2$), based on the following steps:

• Increasing the smoothing factor $\alpha = 1 - \Delta\alpha$ by a predetermined increment $\Delta\alpha := \Delta\alpha - c$, whereby the effect of the filter function is reduced if the second comparison value ($V_2$) is greater than or equal to the second threshold value ($G_2$), or

if the second comparison value ($V_2$) is smaller than the second threshold value ($G_2$) wherein the raw signal is substantially stable:

• Decreasing the smoothing factor $\alpha = 1 - \Delta\alpha$ by a predetermined increment $\Delta\alpha := \Delta\alpha + c$, whereby the effect of the filter function is increased, and

• Comparing the smoothing factor (a) to a predetermined reference smoothing factor ($\alpha_{ref}$), and

Setting a second radiation intensity ($I_2$), which is smaller than the first radiation intensity ($I_1$) if the smoothing factor (a) is smaller than or equal to the reference smoothing factor ($\alpha_{ref}$);

wherein the threshold values ($G_1$, $G_2$) are a measure of the permissible deviation of the analyte content, and wherein the second comparison value ($V_2$) is used for a more precise verification of the stability of the measuring medium;

g. Repeating the steps d) to f) until an abort criterion $n \geq N$ is reached.

2. The method according to claim 1, **characterized in that** the smoothing factor (a) is selected depending on the radiation intensity (I) used.

3. The method according to claim 1 or 2, **characterized in that** it further comprises calculating a first, second, and/or further processed signal ($y_n$) from the first, second, and/or further raw signal ($x_n$) by means of the at least one filter function.

4. The method according to claim 3, **characterized in that** the comparison value is calculated using a mean value which includes the current and/or preceding raw signals ($x_n, x_{n-1}, ..., x_0$) or the current and/or preceding processed signals ($y_n, y_{n-1}, ..., y_0$).

5. The method according to any one of claims 1 to 4, **characterized in that** the filter function is an exponential smoothing function.

6. The method according to any one of claims 1 to 5, **characterized in that** the method comprises as a further step a calculation of the remaining life span of the sensitive element.

## Revendications

1. Procédé pour faire fonctionner un capteur optochimique,
dans lequel le capteur optochimique, lequel sert à la détermination d'une teneur en analyte, présente un boîtier, une source de rayonnement, un détecteur et un élément sensible, dans lequel la source de rayonnement et le détecteur sont agencés dans le boîtier, dans lequel l'élément sensible présente un fluorophore en tant que substance de signalisation, et dans lequel le procédé comprend les étapes suivantes :

a. mise en contact de l'élément sensible avec un analyte, de sorte que la substance de signalisation interagit avec l'analyte ;
b. excitation de la substance de signalisation par la source de rayonnement avec rayonnement d'une première intensité de rayonnement ($I_1$) ;
c. détermination d'un premier signal brut ($x_n$), lequel est une fonction de la teneur en analyte à un premier moment ($t_n$) ;
d. détermination d'un deuxième et/ou autre signal brut ($x_{n,n=n+1}$), dans lequel le deuxième et/ou autre signal brut ($x_{n,n=n+1}$) est une fonction de la teneur en analyte à un deuxième et/ou autre moment ($t_{n,n=n+1}$) ;

e. calcul d'une première valeur de comparaison ($V_1$), laquelle dépend au moins de deux signaux bruts ($x_n$, $x_{n,n:=n+1}$) ou plus et représente une mesure pour la modification d'un signal brut actuel en un ou plusieurs signaux et/ou signaux bruts précédents, et

f. vérification d'un facteur de lissage (a) avec $0 \leq \alpha \leq 1$, lequel est contenu dans une fonction de filtrage, qui convertit des signaux bruts ($x_n$) au moyen de la fonction de filtrage en signaux traités ($y_n$), sur la base d'une comparaison de la première valeur de comparaison ($V_1$) avec une première valeur limite prédéfinie ($G_1$), ainsi que

    i. adaptation du facteur de lissage $\alpha = 1 - \Delta\alpha$ avec $\Delta\alpha = 0$ et réglage de la première intensité de rayonnement ($I_1$), lorsque la première valeur de comparaison ($V_1$) est supérieure ou égale à la première valeur limite ($G_1$), dans lequel le signal brut est instable, ou

    ii. détermination d'une deuxième valeur de comparaison ($V_2$), laquelle dépend au moins de deux signaux bruts ($x_n$, $x_{n,n:=n+1}$) ou plus, lorsque la première valeur de comparaison ($V_1$) est inférieure à la première valeur limite ($G_1$), et

vérification et adaptation du facteur de lissage (a) et/ou de l'intensité de rayonnement (I) réglée sur la base d'une comparaison de la deuxième valeur de comparaison ($V_2$) avec une deuxième valeur limite prédéfinie ($G_2$) à l'aide des étapes suivantes :

    • augmentation du facteur de lissage $\alpha = 1 - \Delta\alpha$ d'un incrément prédéfini $\Delta\alpha := \Delta\alpha - c$, moyennant quoi l'effet de la fonction de filtrage est réduit, lorsque la deuxième valeur de comparaison ($V_2$) est supérieure ou égale à la deuxième valeur limite ($G_2$),

ou lorsque la deuxième valeur de comparaison ($V_2$) est inférieure à la deuxième valeur limite ($G_2$), dans lequel le signal brut est sensiblement stable :

    • réduction du facteur de lissage $\alpha = 1 - \Delta\alpha$ d'un incrément prédéfini $\Delta\alpha := \Delta\alpha + c$, moyennant quoi l'effet de la fonction de filtrage est renforcé,
    et
    • comparaison du facteur de lissage (a) avec un facteur de lissage de référence prédéfini ($\alpha_{ref}$),

et

réglage d'une deuxième intensité de rayonnement ($I_2$), laquelle est inférieure à la première intensité de rayonnement ($I_1$), lorsque le facteur de lissage (a) est inférieur ou égal au facteur de lissage de référence ($\alpha_{ref}$) ;

dans lequel les valeurs limites ($G_1$, $G_2$) sont une mesure pour l'écart autorisé de la teneur en analyte, et dans lequel la deuxième valeur de comparaison ($V_2$) sert à la vérification plus précise de la stabilité du milieu de mesure ;

g. répétition des étapes d) à f) jusqu'à ce qu'un critère d'interruption $n \geq N$ soit atteint.

**2.** Procédé selon la revendication 1, **caractérisé en ce que** le facteur de lissage (a) est sélectionné en fonction de l'intensité de rayonnement (I) utilisée.

**3.** Procédé selon la revendication 1 ou 2, **caractérisé en ce que** celui-ci comprend en outre le calcul d'un premier, deuxième et/ou autre signal traité ($y_n$) à partir du premier, deuxième et/ou autre signal brut ($x_n$) au moyen de l'au moins une fonction de filtrage.

**4.** Procédé selon la revendication 3, **caractérisé en ce que** pour le calcul de la valeur de comparaison, une valeur moyenne est retenue, laquelle comprend le signal brut actuel et/ou les signaux bruts précédents ($x_n$, $x_{n1}$, ..., $x_0$) ou le signal traité actuel et/ou les signaux traités précédents ($y_n$, $y_{n-1}$, ..., $y_0$).

**5.** Procédé selon l'une quelconque des revendications 1 à 4, **caractérisé en ce que** la fonction de filtrage est un lissage exponentiel.

**6.** Procédé selon l'une quelconque des revendications 1 à 5, **caractérisé en ce que** celui-ci comprend en tant qu'autre étape un calcul de la durée d'intervention restante de l'élément sensible.

Fig. 1

Fig. 2

Fig. 3

Fig. 4

Fig. 5

Fig. 6

**EP 2 625 507 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008045841 A1
- US 20100032583 A1